Europäisches Patentamt

European Patent Office

Office européen des brevets

(19)

(11) Veröffentlichungsnummer: **0 302 987 B1**

(12) **EUROPÄISCHE PATENTSCHRIFT**

(45) Veröffentlichungstag der Patentschrift: **15.07.92**

(21) Anmeldenummer: **88102125.7**

(22) Anmeldetag: **13.02.88**

(51) Int. Cl.5: **C08K 13/02**, C08L 27/06, C08L 23/22, C09K 21/14, //(C08K13/02,3:04,3:32,5:05, 5:16)

(54) **Massen zur Herstellung intumeszierender Formkörper und Halbzeuge und deren Verwendung im baulichen Brandschutz.**

(30) Priorität: **14.08.87 EP 87710011**

(43) Veröffentlichungstag der Anmeldung:
**15.02.89 Patentblatt 89/07**

(45) Bekanntmachung des Hinweises auf die Patenterteilung:
**15.07.92 Patentblatt 92/29**

(84) Benannte Vertragsstaaten:
**AT BE CH DE ES FR GB GR IT LI NL SE**

(56) Entgegenhaltungen:
**EP-A- 0 256 967**
**DE-A- 3 421 863**
**GB-A- 1 408 133**
**US-A- 3 574 644**

(73) Patentinhaber: **Dr. Wolman GmbH**
**Postfach 11 60**
**W-7573 Sinzheim(DE)**

Patentinhaber: **W. Döllken & Co GmbH**
**Ruhrtalstrasse 71**
**W-4300 Essen 16(DE)**

(72) Erfinder: **Schwarz, Gabriele, Dipl.-Ing.**
**Belchenstrasse 6**
**W-7570 Baden-Baden(DE)**
Erfinder: **Hettler, Wendelin, Dipl.-Ing.**
**Eisenbahnstrasse 9**
**W-7573 Sinzheim(DE)**
Erfinder: **Stanek, Richard, Dr.-Chem.**
**Würmersheimer Strasse 35**
**W-7552 Durmersheim(DE)**
Erfinder: **Eschbach, Matthias**
**Verusstrasse 46**
**W-4358 Haltern(DE)**

(74) Vertreter: **Mutzbauer, Helmut, Dr. et al**
**BASF Aktiengesellschaft Patentabteilung**
**ZSP-C 6 Carl-Bosch-Strasse 38**
**W-6700 Ludwigshafen(DE)**

**Beschreibung**

Bekannt sind Baustoffe und Bauteile für den vorbeugenden Brandschutz, die sogenannten Blähgraphit enthalten.

Es ist ferner bekannt, Intumeszenzmassen mit Polymeren zu mischen (DE-A-34 21 863) oder Blähgraphit mit entflammbaren Substanzen zu mischen (US-A-3 574 644) oder Polyvinylchlorid mit Feuerschutzmassen und Blähgraphit zu mischen (EP-A-0 256 967).

Blähgraphit ist ein Material, das durch Oxidation oder Elektrolyse mit verschiedenen oxidierenden Stoffen aus kristallinem Naturgraphit hergestellt wird. Durch spätere Hitzeeinwirkung expandiert das Material auf das 40 bis 300fache des ursprünglichen Volumens und der entstandene, sehr voluminöse Schaum (nachstehend als "Thermoschaum" bezeichnet) besitzt eine ähnlich gute Hitze- und Chemikalienbeständigkeit wie unbehandelter Graphit.

Die einzelnen Partikel dieses Thermoschaums sind nur lose miteinander verbunden und werden durch Flammenerosion und/oder Luftbewegungen von der zu schützenden Oberfläche leicht abgetragen.

Als nachteilig erweist sich die auch im Vergleich zu anderen Dämmschichtbildnern niedrige Initialtemperatur von ca. 100°C, wodurch die Auswahl der als Bindemittel für Formmassen in Frage kommenden Stoffe sehr stark eingeschränkt wird:

Die Verarbeitungstemperatur praktisch aller gängigen thermoplastischen Kunststoffe liegt weit über der Initialtemperatur des Blähgraphits, unabhängig davon, ob es sich um Polykondensate, wie Polyamide, Polycarbonate, Polyester, Polysulfone oder Vertreter der Polymerisatgruppe, wie z.B. Polyethylen, Polypropylen, Polyvinylchlorid, Polystyrol, Polymethylmethacrylat, Polyacrylnitril, Polyvinylalkohol handelt. Die bisher bekannten Feuerschutzmassen auf Basis von Blähgraphit sind daher entweder als Anstrichmittel konzipiert oder in einer z.B. mehrschichtigen elastomeren und/oder duromeren Matrix eingebunden.

Auch die zu den Polymerisaten gehörenden und vom Brandverhalten sehr günstig zu beurteilenden Fluorkunststoffe kamen bisher aus denselben Gründen nicht zum Einsatz.

Auch moderne Mischpolymerisate, wie sie z.B. aus der DE 35 45 409 bekannt sind, würden als schwerbrennbare Formmassen an sich eine gute Matrix für Blähgraphit ergeben. Aber auch hier liegen die für die Verarbeitung unter Aufschmelzen benötigten Temperaturen im Bereich von 220°C bis 330°C, also weit über dem Initialbereich von Blähgraphit.

Die Einarbeitung von Blähgraphit in Brandschutzmassen erfolgt deshalb überwiegend durch Vermischen mit wäßrigen oder lösemittelhaltigen Anstrichmassen (US-Patent 35 74 644, AT-A 330 320, DE 24 21 332, DE 28 41 907, DE 30 09 104). Die so erhaltenen Produkte werden entweder direkt als Feuerschutzanstriche verwendet oder sie dienen als Beschichtungskomponente für Vlies und/oder Gewebeträgermaterialien. Nach Trocknung und Aushärtung werden diese Materialien in Form von Platten bzw. Schichtwerkstoffen und Streifen vermarktet. Diese an sich sehr aufwendige Fertigung kann nun nicht verhindern, daß im praktischen Einsatz derartige Produkte eine Reihe gravierender Mängel aufweisen.

Trotz Verwendung vorwiegend elastomerer Bindemittel sind die Endprodukte hart und spröde, was sich schon beim Zuschneiden und Einbau erschwerend bemerkbar macht. Bei federnd arbeitendenden Bauteilen, wie Metalltüren, kommt es z.B. zum Herausbrechen der als Randschutz montierten Feuerschutzstreifen. Noch schwerwiegender ist die lockere Struktur des unter Hitzeeinwirkung entstehenden Schaumes.

Um diese lockere Struktur zu verbessern, ist vorgeschlagen worden, dem elastomeren Hauptbindemittel ein sich bis zu einer Temperatur von 200°C thermoplastisch verhaltendes Phenolharz oder ein Gemisch von Phenolharzen zugegeben, das im Brandfall durch die temperaturbedingte Zersetzung ein den aufgeblähten Graphit stützendes Koksgerüst bilden soll. Auch wird die Oberfläche mit einem silikatischen Deckanstrich verschlossen, der aber wiederum im Brandfall durch spezielle Porenbildner aufgelockert werden soll. Alle diese sehr aufwendigen Kaschierungsmaßnahmen konnten die Eigenschaften des im Brandfall vom Blähgraphit gebildeten Thermoschaums nicht wesentlich verbessern, und insbesondere bei offenen Einsatzbereichen wird dieser durch die Flammenerosion und Luftbewegung schnell vom Untergrund weggeblasen, was zum Versagen des betroffenen Brandschutzbauteiles führt.

Die Eigenschaften des im Brandfall entstehenden Thermoschaumes scheinen generell eine Schwachstelle der bekannten Intumeszenzmassen zu sein. Eine konkrete Mischung entwickelt nämlich unter Hitzeeinwirkung auch eine konkrete Schaumqualität. die u.a. durch den Aufschäumfaktor, Blähdruck und andere mechanische Eigenschaften charakterisiert wird.

Die bisherigen Erfahrungen mit intumeszierenden Feuerschutzmassen ergaben aber eindeutig, daß für verschiedene Anwendungsbereiche unterschiedliche Eigenschaften des im Brandfall entstehenden Thermoschaumes von Vorteil sind. Gute mechanische Festigkeiten können z.B. ausschlaggebend für einen wirkungsvollen Einsatz in diesen Bereichen sein, wo im Brandfall die abdichtende Masse einen starken Über- oder Unterdruck, einer Windbeanspruchung oder auch einer starken Flammenerosion ausgesetzt wird. In anderen Bereichen, z.B. in laminierten Werkstoffen, kann der Blähdruck und/oder Aufschäumfaktor primär einen wirkungsvollen Einsatz garantieren.

Für viele Einsatzbereiche scheinen insbesondere die mechanischen Festigungswerte des Thermoschaums unzureichend zu sein.

Eine Verbesserung auf Kosten des Aufschäumfaktors durch Modifizierung der Zusammensetzung der Massen ist schon vorgeschlagen worden (DE 27 14 456, DE 34 21 863). Das bedeutet aber auch, daß eine Anpassung der Eigenschaften des Thermoschaumes an die Anforderungen der verschiedenen Einsatzgebiete bei den bekannten Intumeszenzmassen bisher nur über eine qualitative Änderung der Grundrezeptur möglich ist.

Der Erfindung liegt die Aufgabe zugrunde, intumeszierende Formkörper oder Halbzeug auf Basis von Blähgraphit zu konzipieren, die durch ihre Festigkeit, Flexibilität und Wasserbeständigkeit leicht zu handhaben sind, und ein potentiell sehr breites Anwendungsspektrum aufweisen. Weiterhin soll die Möglichkeit gegeben werden, die Qualität des unter Hitzeeinwirkung entstehenden Thermoschaums den Anforderungen der jeweiligen Einsatzbereiche anzupassen.

Unmittelbarer Erfindungsgegenstand ist eine thermoplastisch verarbeitbare Mischung, insbesondere zur Herstellung von Formkörpern oder Halbzeugen, die bei Hitzeeinwirkung aufschäumen und dabei wärmedämmende stabile Schäume bilden, die enthält

A) 5 bis 95 Gew.% Blähgraphit

B) 5 bis 95 Gew.% eines bei 150°C oder weniger thermoplastisch verarbeitbaren Polymeren, außer Polyvinylchlorid,

C) 1 bis 30 Gew.% eines die Verarbeitbarkeit verbessernden Zusatzes, nämlich einer Mischung, die ihrerseits besteht aus mindestens zwei Bestandteilen, ausgewählt aus

    a) bis zu 70 Gew.% eines Phosphats

    b) bis zu 70 Gew.% einer Polyamidverbindung und

    c) bis zu 70 Gew.% eines mehrwertigen Alkohols.

mit der Maßgabe, daß die Summe der Bestandteile A bis C und a bis c jeweils 100 ist.

Vorteilhaft sind insbesondere Mischungen, die von A, B und C etwa gleiche Mengen enthalten, wobei der Anteil an Blähgraphit (A) so hoch wie jeweils wänschenswert gewählt werden kann, z.B. bis zu 70 Gew.%, je nach dem verwendeten Polymeren. Andererseits wird man je nach dem verwendeten Polymeren versuchen, mit möglichst wenig der Mischung C auszukommen, obwohl auch sie, für sich betrachtet, der Gesamtmischung im Hinblick auf den gedachten Verwendungszweck vorteilhafte Eigenschaften verleiht, also ein größerer Mengenanteil technisch gesehen nicht nachteilig ist. Ein hinsichtlich der Mengen variiertes Versuchsprogramm (vgl. Beispiel und Tabelle 1) zeigt dies.

Die Erfindung beruht auf der Beobachtung, daß Mischungen, wie sie vorstehend unter C beschrieben wurden, eine Art Gleitmittel für die thermoplastisch verarbeitbaren Mischungen bilden und eine deutliche Herabsetzung der Verarbeitungstemperatur im Vergleich zum reinen Polymeren ermöglichen.

Unerwartet wurde gefunden, daß bei Verwendung einer vorwiegend auf Blähgraphit basierenden Intumeszenzmischung dieser Gleiteffekt wesentlich stärker ausgeprägt ist und daß schon bei Anteilmengen von nur 2 Gew.% C technisch verwertbare Extrudate möglich sind. Dies ist überraschend, weil Blähgraphit für sich oberhalb von 75°C zu zerfallen beginnt: Es ist nämlich bekannt, daß Feuerschutzmischungen mit Blähgraphit sehr empfindlich, auch auf eine kurzfristige Überschreitung der sog. Initialtemperatur, reagieren. So darf z.B. bei der Trocknung von Blähgraphit die Temperatur von 80°C nicht überschritten werden.

Versuche zur Schmelzkompoundierung oder Schmelzextrusion von thermoplastischen Formmassen mit einem Blähgraphitanteil führten bisher ausnahmslos zu Produkten mit stark aufgerauhter Oberfläche.

Die schon erwähnte Mischung bewirkt durch ihr Gleit- oder Schmierwirkung eine Glattung der Oberfläche von extrudierten Formkörpern und Halbzeugen. Bei Halbzeugen, wie Profilen, Bändern, Folien ist eine glatte Oberfläche oft Voraussetzung für einen wirkungsvollen Einsatz in Schicht- oder Verbundwerkstoffen.

Dieser Glätteffekt tritt nicht nur bei Verwendung von Ammoniumphosphat ein sondern auch mit anderen Substanzen, z.B. organischen Phosphatverbindungen (Melaminphosphat, Isodecyldiphenylphosphat, 2-Ethylhexyldiphenylphosphat, Trikresylphosphat, Triphenylphosphat und anderen Alkyl- oder Arylphosphaten oder -phosphatverbindungen) allein oder in Mischungen mit bekannten Gleitmitteln, wie Mischestern aus Adipinsäure, Pentaerythrit und Stearinsäure und/oder Phthalsäureestern. Andererseits kann als Polyamidverbindung neben (freiem) Melamin, wie gesagt, Melaminphosphat und ferner insbesondere Dicyandiamid verwendet werden. Als mehrwertiger Alkohol wird erfindungsgemäß bevorzugt Pentaerytrit, jedoch auch Sorbit, Rohrzucker und andere technische mehrwertige Alkohole verwendet.

Weiterhin wurde gefunden, daß dieser Glätteffekt bei thermoplastischen Kunststoffen mit relativ niedriger Verarbeitungstemperatur, außer Polyvinylchlorid, wie z.B. Ethylen-Butyl-Copolymerisat, Ethylen-Vinylacetat-Copolymerisat, Poylethylen niedriger Dichte. Acrylnitril-Butadien-Styrol-Polymerisat und Polyphenylenoxidkondensat erreichbar ist, wenn sie für sich betrachtet, eine Verarbeitungstemperatur von 150°C oder weniger ermöglichen. Die Polymeren können jeweils die üblichen, bei thermoplastischer Verarbeitung benötigten Weichmacher, Fließmittel, Stabilisatoren, Entformungsmittel, Antistatica u. dgl. enthalten.

Die erfindungsgemäßen Massen bzw. Mischungen enthalten gegebenenfalls zur Verbesserung des Feuerschutzverhaltens für sich ebenfalls dämmend wirkende Bestandteile wie Blähglimmer, Alkalisilikate, Borate, Aluminium- und Magnesiumhydroxide, organische Halogenverbindungen, Antimontrioxid, fasrige und pulvrige Extender u. dgl.

Die erfindungsgemäßen Mischungen können hinsichtlich ihrer Zusammensetzung zur Steuerung und Eigenschaften des unter Hitzeeinwirkung entstehenden Thermoschaums variiert werden. So können z.B. durch einfache Veränderung des Mengenverhältnisses Feuerschutzkomponente und der Kunststoffmatrix die Eigenschaften des Thermoschaums den Anforderungen der einzelnen Einsatzgebiete angepaßt werden.

Die erfindungsgemäße Formkörper und Halbzeuge können in verschiedenen Bereichen des baulichen Brandschutzes wirkungsvoll eingesetzt werden.

Diese Möglichkeiten sollen anhand der nachfolgenden Beispiele erläutert werden, ohne daß diese auch nur annähernd das potentielle Anwendungsspektrum abgrenzen können. Mischungen mit Polyvinylchlorid sind nicht Gegenstand der Erfindung.

Beispiel 1

Beispiel 1 fällt nicht unter den Schutzumfang der Ansprüche 1-6
Halbzeuge in Form 16 mm breiten und 2 mm Endlosstreifen wurden auf einem Einwellenextruder aus folgenden, 3-Komponenten-Feuerschutzmassen, schmelzextrudiert:

| Komponente A - Kunststoffmatrix | |
|---|---|
| PVC-E Pulver (Hostalit 4569) | 50 Teile |
| Weichmachergemisch (Dibutyl-, Diacetylphthalat) | 30 Teile |
| Trikresylphosphat | 10 Teile |
| Fließmittel auf Basis von Bleistearat (Pb Ca 3636) | 2 Teile |

| Komponente B | |
|---|---|
| Blähgraphit Typ MBS (48 - 80 mesh) | 100 Teile |

| Komponente C - Gleitmittel | |
|---|---|
| Pentaerythrit | 40 Teile |
| Dicyandiamid | 30 Teile |
| Ammoniumphosphat | 30 Teile |

Die einzelnen Extrusionsversuche wurden mit unterschiedlichen Relationen der drei Komponenten durchgeführt, und die Ergebnisse in der Tabelle 1 zusammengestellt.

4

Tabelle 1

| Versuch Nr. | Zusammensetzung Gew.% | | | Oberfläche | Reißdehnung % | Zugfestigkeit N/mm² | Schaumhöhe (cm) ohne Druck / Gegendruck 0,1 bar | | Schaumvolumen ohne Druck / Gegendruck 0,1 bar | | Schaumqualität bei Windbeanspr. 4 m/sek. |
|---|---|---|---|---|---|---|---|---|---|---|---|
| | A | B | C | | | | ohne Druck | Gegendruck 0,1 bar | ohne Druck | Gegendruck 0,1 bar | |
| 1(Vgl.) | 90 | 10 | 0 | Pocken | 120 | 10,8 | 0,6 | 0,2 | 10 | 1 | festes Kissen |
| 2 | 89 | 10 | 1 | rauh | 124 | 10,9 | 0,6 | 0,2 | 12 | 1 | festes Kissen |
| 3 | 88 | 10 | 2 | glatt | 115 | 9,4 | 0,6 | 0,2 | 12 | 1 | festes Kissen |
| 4 | 80 | 18 | 2 | glatt | 78 | 6,4 | 1,5 | 0,2 | 25 | 1,5 | festes Kissen |
| 5 | 67 | 30 | 3 | glatt | 50 | 4,0 | 1,5 | 0,3 | 30 | 2 | festes elastisches Kissen |
| 6 | 58 | 38 | 4 | glatt | 40 | 2,1 | 2,0 | 1 | 50 | 10 | lockeres Kissen |
| 7 | 50 | 50 | 0 | Pocken | 20 | 1,6 | 2,5 | 1 | 90 | 15 | noch Kissen, Einzelpartikel |
| 8 | 50 | 48 | 2 | rauh | 15 | 1,5 | 2,5 | 1 | 90 | 14 | fliegen Einzelpartikel |
| 9 | 50 | 45 | 5 | glatt | 15 | 1,2 | 2,5 | 1 | 90 | 12 | fliegen Einzelpartikel |
| 10 | 45 | 50 | 5 | glatt | <10 | 1,2 | 2,5 | 1 | 100 | 15 | fliegt |
| 11 | 40 | 54 | 6 | glatt | <10 | 0,9 | 2,5 | 1 | 100 | 16 | fliegt |
| 12 | 37 | 57 | 6 | glatt | <10 | 0,7 | 2,5 | 1 | 100 | 20 | fliegt |
| 13 | 34 | 60 | 6 | glatt | <10 | 0,8 | 3 | 1 | 120 | 40 | fliegt |

Beispiel 1.1

Die vordere Wand eines Brandofens wurde mit zwei Betonplatten verschlossen, zwischen denen ein 1 m lange und 2 cm breite Fuge offen gelassen wurde. Die Fuge wurde mit einem hochkomprimierbaren PU-Dichtungsband vom Typ Cirkel 22 der Fa. Kunststoffchemie B.V. abgedichtet.

Das 4 x 4 cm starke Dichtungsband wurde in der 2 cm breiten Fuge auf 50 % seines ursprünglichen Volumens komprimiert. Nach Zünden der Brenner sollte die Temperatur nach der ETK gefahren werden, aber schon nach 6 Minuten kam es zum Durchbrand des Dichtungsstreifens.

Beim zweiten Versuch wurde das Dichtungsband mittelschichtig mit einem Brandschutzstreifen versehen, der während des fünften Extrusionsversuches aus 67 Gew.% weichgemachtem PVC, 30 Gew.% Blähgraphit und 3 Gew.% Glättmittel gefertigt wurde.

Auch hier wurde die Beflammung nach der ETK vorgenommen, aber der Durchbrand erfolgte erst nach 108 Minuten.

Beim analog durchgeführten dritten Brandversuch wurde das Dichtungsband mittelschichtig mit einem Brandschutzstreifen nach dem Extrusionsversuch Nr. 13 armiert. Der Blähgraphitanteil liegt hier mit 60 Gew.% doppelt so hoch wie bei dem vorangegangenen Versuch, trotzdem kam es hier schon nach 48 Minuten zum Durchbrand der Fugendichtung. Der in diesem Falle nur sehr lose zusammenhängende, hochvoluminöse Thermoschaum wurde durch die Flammenerosion relativ schnell abgetragen.

Beispiel 1.2

Hier wurde die Eignung der Streifenextrudate zur Randabdichtung von Feuerschutzabschlüssen getestet. Dazu wurden Modelle von Brandschutztüren aus einem Stahlrahmen und einer Einlage von je zwei 25 mm starken Calcium-Silikat-Faser-Platten vom Typ Isoternit 850 der Fa. Stornit AG verwendet.

Der aus 1 mm starkem Blech gefertigte Rahmen wurde einmal mit einem Doppelfalz und einmal flach als Stumpftür geformt.

Weiterhin wurden Feuerschutzstreifen mit einem Querschnitt von 10 x 2 mm aus der Mischung Nr. 5 des Beispiels 1 (67 Gew.% PVC-Matrix, 30 Gew.% Blähgraphit, 3 Gew.% Glättmittel) extrudiert. Die Streifen wurden auf dem Blechrahmen wahlweise einzeln oder doppelt verklebt. Der Spalt zwischen Türrahmen und Türzarge betrug 4 mm und verminderte sich nur an den Stellen, wo die Streifen aufgebracht waren auf 2 mm. Um die Prüfbedingungen weiter zu verschärfen, wurde im Brandraum mit einem Überdruck gearbeitet, wodurch bis zum Aufschäumen gewaltige Rauchmengen in den Prüfraum gelangten.

Nach diesen Erfahrungen wurden speziell entwickelte Combiprofile in die Versuche aufgenommen. Diese Combiprofile bestehen aus einem üblichen Weich-PVC-Schaum Türdichtungsprofil, in dem axial eine 6 mm runde Brandschutzschnur aus der Mischung Nr. 6 (58 Gew.% weichgemachtes PVC, 38 Gew.% Blähgraphit und 4 Gew.% Glättmittel) durch Koextrusion eingebracht wurden. Diese Combiprofile wurden so an der Türzarge angebracht, daß sie beim Schließen der Tür als Anschlagdämpfer dienten.

Die Beflammung nach der ETK wurde jeweils Durchbrand im Randbereich abgebrochen.

Diese Ergebnisse der Brandversuche sind in der Tabelle 2 zusammengestellt.

Tabelle 2

| Türart | Randschutz | Streifenart / Durchbrand (Min.) | | |
|--------|-----------|------|------|--------|
| Stumpftür | einfach | 5/78 | 13/18 | Combi/75 |
| Stumpftür | doppelt | 5/102 | 12/26 | - |
| Falztür | einfach | 5/80 | 13/38 | Combi/110 |
| Falztür | doppelt | 5/166 | 13/44 | - |

Unter Berücksichtigung der extrem scharfen Prüfbedingungen müssen insbesondere die mit den Streifen Nr. 5 und den Combiprofilen erreichten Brandwiderstandszeiten als außergewöhnlich gut angesehen werden.

Beispiel 1.3

Die zuvor beschriebenen Versuche bezogen sich auf den sogenannten "offenen" Einsatz der Feuerschutzstreifen und -profile. In vielen Ländern wird von den Bauaufsichtsbehörden aber deren Abdeckung mit Furnier oder Blech verlangt.

Eine weitere Versuchsserie diente deshalb der Überprüfung des Brandverhaltens, der mit Aluminiumblechen abgedeckten Feuerschutzstreifen Nr. 5 und Nr. 13. Auch hier wurden die schon zuvor verwendeten Stumpftüren verwendet. Die Streifen selbst wurden diesmal abweichend in der aus Hartholz gefertigten Zarge versenkt und mit Aluminiumblech verschiedener Stärke (0,05 mm / 0,1 mm / 0,2 mm) abgedeckt.

Die aufgeschäumten Streifen Nr. 5 konnten das 0,05 mm starke Blech durchbrechen und eine Standzeit von 45 Minuten erreichen. Der von ihnen entwickelte Blähdruck reichte zum Aufreißen der stärkeren Bleche nicht aus. Das gelang mühelos aber der Version Nr. 13, die unter diesen Bedingungen Brandwiderstandszeiten von 42 Minuten (0,05 mm), 40 Minuten (0,1 mm) und 95 Minuten (0,2 mm) erreichten. Diese wesentliche Verbesserung läßt sich durch die Stützung des mechanisch schwachen Thermoschaums durch das aufgeplatzte Blech erklären.

Beispiel 2

Beispiel 2 fällt nicht unter den Schutzumfang der Ansprüche 1-6
Auf einem Laborkalander wurde eine 500 mm breite und 1 mm starke Folie aus der Mischung Nr. 6 (58 Gew.% PVC-Matrix, 38 Gew.% Blähgraphit und 4 Gew.% Glättmittel) kalandriert. Die Folie wurde zhur Verbesserung des Brandverhaltens flächiger Bauteile verwendet.

Zur Überprüfung der Funktionsfähigkeit der Feuerschutzfolie wurden 50 x 50 cm große Schichtkörper hergestellt und in einem Kleinbrandofen nach DIN 4102 Teil B ohne Gegenheizung beflammt.

Als Vergleichsmuster diente eine 38 mm starke Spanplatte, die beidseitig mit 3,5 mm starken Hartfaserplatten beschichtet war, Gesamtstärke 45 mm. Bei einem Versuchskörper wurde jeweils zwischen die Spanplatte und den Hartfasern eine erfindungsgemäße Feuerschutzfolie gelegt. Das auf fünf Schichen aufgebaute Verbundteil wies eine Stärke von 47 mm auf.

Ein zweiter Versuchskörper wurde so zusammengebaut, daß zwei Spanplatten von je 19 mm Stärke mittelschichtig durch eine erfindungsgemäße Feuerschutzfolie getrennt waren. Auch hier bestand die Außenbeplankung aus den beschriebenen Hartfaserplatten und die Gesamtstärke des fünfschichtigen Verbundteiles betrug 46 mm.

Bei der Beflammung wurde auf der dem Feuer abgewandten Seite die Temperatur der Hartfaserplatte mittels drei Thermoelementen gemessen.

Die Versuche wurden jeweils nach Überschreiten des Durchschnittswertes um 180°C, im Vergleich zur Ausgangstemperatur, unterbrochen.

Das nicht geschützte Vergleichsmuster erreichte unter diesen Bedingujngen eine Brandwiderstandszeit von 26 Minuten, doppelt geschützte Prüfkörper erreichen 76 Minutehn und der einfach geschützute Prüfkörper kam immerhin noch auf einen Wert von 47 Minuten.

Beispiel 3

Eine thermoplastische Brandschutzmasse aus 65 Gew.% von bitumisierten Ethylenbutylacrylatcopolymerisat (®Lucobit 1210 der BASF AG), 25 Gew.% Blähgraphit vom Typ CMB der Fa. Tropag und 10 Gew.% Melaminphosphat wird auf einem Zweiwellenextruder und angeschlossenem Walzenglättwerk zu einer 1040 mm breiten und 0,5 mm starken Feuerschutzfolie verarbeitet.

Durch die hohe Flexibilität und Wasserbeständigkeit zeichnet sich ein potentielles breites Anwendungsspektrum, z.B. im Tunnel- und/oder Untertagebau, ab. Ein weiterer naheliegender Bereich ist der Flachdachbereich. Der größte Teil der Produktion wird zu Dachdichtungsbahnen verarbeitet, die im Flachdachbereich als einlagige Kunststoffdichtungsbahnen verwendet werden.

Anstelle der normal üblichen 2 mm starken ECB-Dachdichtungsbahn wurde versuchsweise eine 1,5 mm starke Bahn extrudiert und vor den Glättwalzen mit der erfindungsgemäßen 0,5 mm starken Feuerschutzfolie zusammengeführt, wobei die Unterseite der 1,5 mm starken Extrusionfolie mit einem üblichen Glas- oder Polyestervlies unterlegt wird.

Das Brandverhalten der so hergestellten Combination wurde nach den entsprechenden Prüfvorschriften getestet.

Gemäß den deutschen Anforderungen wurden zwei Probedächer mit Flächenabmessungen von 1,5 m x 2 m vorbereitet. Diese Probedächer wurden als leichte Flachdachaufbauten aus einem Stahltrapezblech, einer 15 cm starken Dämmschicht aus Mineralfaserplatten und der erfindungsgemäßen Combidichtungsbahn zusammengestellt. Um an den Stößen eine einwandfreie Heißluftverschweißung der Überlappung zu gewährleisten, mußte die Brandschutzfolie an diesen Stellen entfernt werden. Die Prüfung der Widerstandsfähigkeit gegen Flugfeuer und strahlende Wärme nach DIN 4102 Teil 7 (Ausgabe März 1987) ergab, daß die Anforderungen sowohl bei einer Dachneigung von 15°, wie auch 45° erfüllt wurden.

Basierend auf diesen guten Ergebnissen wurde weiterhin das Brandverhalten der Combibahn im sogenannten Nordtest, d.h. nach Prüfvorschriften der skandinavischen Länder, geprüft. Auch hierfür wurden zwei Flachdachaufbauten, diesmal mit einer Länge von 1000 mm und einer Breite von 400 mm, vorbereitet. Diese Aufbauten bestanden von unten gesehen aus Stahltrapezprofilen, 40 mm Polystyrolhartschaumplatten, 30 mm starken Mineralfaserplatten (Glaswolle) und der erfindungsgemäßen Dachcombibahn.

Die erste Brandprüfung erfolgte mit einer Windbeanspruchung von 2 m/s und bei der zweiten wurde die Windbeanspruchung auf 4 m/s heraufgesetzt. Die Anforderungen der DS 1063.1 bzw. SBN Godkännande Regeler wurden mit großer Reserve erfüllt.

Dabei gelten diese Brandprüfungen allgemein als eine der schärfsten Prüfmethoden von Flachdachaufbauten überhaupt.

**Patentansprüche**

1. Thermoplastisch verarbeitbare Mischung, insbesondere zur Herstellung von Formkörpern oder Halbzeugen, die bei Hitzeeinwirkung aufschäumen und dabei wärmedämmende stabile Schäume bilden, die enthält
   A) 5 bis 95 Gew.% Blähgraphit,
   B) 5 bis 95 Gew.% eines bei 150°C oder weniger thermoplastisch verarbeitbaren Polymeren, außer Polyvinylchlorid,
   C) 1 bis 30 Gew.% einer Mischung, die ihrerseits besteht aus mindestens zwei Bestandteilen, ausgewählt aus
      a) bis zu 70 Gew.% eines Phosphats
      b) bis zu 70 Gew.% einer Polyamidverbindung und
      c) bis zu 70 Gew.% eines mehrwertigen Alkohols,
   mit der Maßgabe, daß die Summe der Anteile A bis C und a bis c jeweils 100 ist.

2. Mischung nach Anspruch 1, bei der das Polymer B Polyisobutylen ist.

3. Mischung nach Anspruch 1, bei der mindestens einer der Bestandteile C, entweder a: Ammoniumphosphat oder b: Dicyandiamid oder c: Pentaerythrit ist.

4. Formkörper oder Halbzeug, erhalten durch Spritzgießen, Kalandrieren oder Extrudieren einer Mischung nach Anspruch 1.

5. Verfahren zur Herstellung von Formkörpern oder Halbzeugen aus einer Mischung nach Anspruch 1, dadurch gekennzeichnet, daß die Verarbeitungstemperatur unter 150°C liegt.

6. Verfahren nach Anspruch 5, dadurch gekennzeichnet, daß die Verarbeitungstemperatur unter 120°C liegt.

**Claims**

1. A thermoplastic mixture, in particular for the production of moldings or semifinished articles which expand on exposure to heat, forming heat-insulating, stable foams, which contains
   A) from 5 to 95% by weight of expandable graphite,
   B) from 5 to 95% by weight of a polymer, apart from polyvinyl chloride, which can be processed as a thermoplastic at 150°C or less,
   C) from 1 to 30% by weight of a mixture which itself comprises at least two constituents selected from
      a) up to 70% by weight of a phosphate
      b) up to 70% by weight of a polyamide compound and
      c) up to 70% by weight of a polyhydric alcohol,
   with the proviso that the sum of the proportions of A to C and a to c is in each case 100.

2. A mixture as claimed in claim 1, where the polymer B is polyisobutylene.

3. A mixture as claimed in claim 1, where at least one of the constituents C is either a: ammonium phosphate or b: dicyandiamide or c: pentaerythritol.

4. A molding or semifinished article obtained by injection molding, calendering or extrusion of a mixture as claimed in claim 1.

EP 0 302 987 B1

**5.** A process for the production of moldings or semifinished articles from a mixture as claimed in claim 1, wherein the processing temperature is below 150°C.

**6.** A process as claimed in claim 5, wherein the processing temperature is below 120°C.

**Revendications**

**1.** Mélange apte au travail thermoplastique, en particulier pour la fabrication de corps moulés ou de produits semi-finis qui, sous l'action de la chaleur, s'expansent en produits alvéolaires stables isolants de la chaleur, contenant

A) 5 à 95 % en poids de graphite gonflé,

B) 5 à 95 % en poids d'un polymère apte au travail thermoplastique à 150 degrés C ou au-dessous, à l'exception du polychlorure de vinyle,

C) 1 à 30 % en poids d'un mélange consistant lui-même en au moins deux constituants choisis parmi les suivants :

a) jusqu'à 70 % en poids d'un phosphate,

b) jusqu'à 70 % en poids d'un polyamide et

c) jusqu'à 70 % en poids d'un alcool polyvalent,

étant spécifié que la somme des composants A à C et des composants a à c est égale à 100 dans les deux cas.

**2.** Mélange selon la revendication 1, dans lequel le polymère B est du polyisobutylène.

**3.** Mélange selon la revendication 1, dans lequel au moins un des composants C consiste a) en phosphate d'ammonium, ou b) en dicyanodiamide ou c) en le pentaérythritol.

**4.** Corps moulés ou produits semi-finis obtenus par moulage par injection, calandrage ou extrusion d'un mélange selon la revendication 1.

**5.** Procédé pour la fabrication de corps moulés ou produits semi-finis à partir d'un mélange selon la revendication 1, caractérisé en ce que la température de travail est inférieure à 150 degrés C.

**6.** Procédé selon la revendication 5, caractérisé en ce que la température de travail est inférieure à 120 degrés C.

9